# NEUE EUROPÄISCHE PATENTSCHRIFT

(11) **EP 0 419 704 B2**
(45) Veröffentlichungstag und Bekanntmachung des Hinweises auf die Entscheidung über den Einspruch: **20.12.1995**
(45) Hinweis auf die Patenterteilung: 07.07.1993
(21) Anmeldenummer: 89117899.8
(22) Anmeldetag: 27.09.1989
(51) Int. Cl.: B60H 1/24, B60H 1/00

(54) **Belüftungsanlage für ein Kraftfahrzeug**
Ventilation installation for a motor vehicle
Installation de ventilation pour un véhicule automobile

(43) Veröffentlichungstag der Anmeldung: 03.04.1991
(73) Patentinhaber: SIEMENS AKTIENGESELLSCHAFT, 80333 München (DE)
(72) Erfinder: Müller, Otto, Dipl.-Ing., D-8601 Sesslach (DE)
(74) Vertreter: COHAUSZ HASE DAWIDOWICZ & PARTNER

(56) Entgegenhaltungen:
- EP-A- 0 039 846
- EP-A- 0 170 177
- EP-A- 0 210 548
- EP-A- 0 272 789
- DE-A- 2 353 530
- DE-A- 3 730 466
- DE-C- 3 226 438
- DE-C- 3 445 235
- FR-A- 2 063 205
- PATENT ABSTRACTS OF JAPAN vol. 9, no. 7 (M-350)(1730) 12 Januar 1985, & JP-A-59 156815 (NIPPON DENSO K.K.) 06 September 1984,
- PATENT ABSTRACTS OF JAPAN vol. 12, no. 487 (M-778)(3334) 20 Dezember 1988, & JP-A-63 207713 (NIPPON DENSO CO. LTD.) 29 August 1988,
- PATENT ABSTRACTS OF JAPAN vol. 7, no. 133 (M-221)(1278) 10 Juni 1983, & JP-A-58 49511 (TOYOTA JIDOSHA KOGYO K.K.) 23 März 1983,

## Beschreibung

Die Erfindung bezieht sich auf eine Belüftungsanlage für ein Kraftfahrzeug gemäß Oberbegriff des Anspruchs 1; eine derartige Belüftungsanlage ist aus der EP-A1-0 170 177 bekannt. Im Falle der EP-A1-017 0177 besteht die Möglichkeit, daß für die Innenraum-Seitenhälfte des Fahrer bzw. des Beifahrers die Gemäß der Automatik programm bestimmten Einstellungen durch manuell betätigbare Tasten am Automatik Bediengerät mit zusätzlichen festgelegten Einstellungen der Lufteinströmsteuerorgane im Sinne einer vollen Schließung bzw. vollen Öffnung der Luftströmung zur Fußebene bzw. Fuß- und Mittelbene übersteuerbar sind.

Bei Einer durch die DE-A1-37 30 466 bekannten Belüftungsanlage mit automatisch geregelter Lufttemperatur und angepaßter Luftmenge und Luftverteilung zum Innenraum des Fahrzeuges dienen die Auströmdüsen in der Mittelebene (Armaturenbrett) des Fahrzeuges vor allem im Kühlbetrieb zur direkten Anströmung der Wageninsassen mit kühler Luft. Von der vorzugsweise elektronischen Regelvorrichtung werden in einem geschlossenen Regelkreis nach einem vorgegebenem Programm abhängig von einem an einem Bediengerät im Armaturenbrett vorgebbaren Temperatur-Sollwert einerseits und von verschiedenen Sensoren, insbesondere von Temperatur-Sensoren für die Außenluft, für die Ausblasluft in der zentralen ausgangsseitigen Luftkammer des Klimagerätes, der Innenluft im Fahrzeug-Innenraum, dem Wärmetauscher und dem Verdampfer sowie gegebenenfalls einem Sensor zur Erfassung der Intensität der Sonneneinstrahlung abgegebenen Istwerte die Gebläsedrehzahl, die Luftverteilerklappen, gegebenenfalls die Frischluft-/Umluftklappen sowie der Kompressor und ein Wasserventil in einem Wärmetauscher automatisch eingestellt; die Verstellung von in den Luftaustrittsdüsen der Mittelebene angeordneten Luftabsperrklappen ist dabei allein der vollautomatischen Regelung der Belüftungsanlage unterworfen. Die direkte Anströmung aus den Ausströmdüsen der Mittelebene mit kalter Luft wird von vielen Fahrzeuginsassen bei hohen Temperaturen im allgemeinen als angenehm empfunden, jedoch kann es auch zu unangenehmen Zugerscheinungen durch das Einblasen sehr kalter Luft kommen, denen der Fahrgast dann bei einer vollautomatischen Klimaanlage ausgeliefert ist.

Der Belüftungskomfort im Sinne eines individuellen Eingriffs zur Verhinderung von gegebenenfalls als unangenehme Zugerscheinung empfundender Anströmung durch die Ausströmdüsen in der Mittelebene kann erfindungsgemäß bei einer Belüftungsanlage der eingangs genannten Art mit einfachen Mitteln durch die Lehre des Anspruchs 1 verbessert werden; durch diese Maßnahme kann eine Override-Funktion über die Automatikfunktion der Klimaanlage auf die einzelnen Absperrklappen mit geringem zusätzlichen Konstruktionsaufwand und unter Mitbenutzung der Regelvorrichtung individuell ermöglicht werden.

In konstruktiv besonders einfacher und gleichzeitig designfördernden Weise ist zur manuellen Eingriffsmöglichkeit in die Regelautomatik zur zumindest teilweisen individuellen Absperrung verschiedener Ausströmdüsen nach einer Ausgestaltung der Erfindung in jedes Ausströmdüsengehäuse seitlich ein Drehbedienknopf integriert, von dem ein Einstellkontakt eines Stell-Potentiometers mit einem Einschaltbereich mit konstantem Stellwert für einen reinen Automatikregelbetrieb und einem Override-Steuerbereich mit veränderlichem Stellwert zur entsprechend veränderlichen Absperrung der Ausströmdüsen betätigbar ist.

Zur Verhinderung von ungünstigen Betriebszuständen der Klimaanlage, z.B. einem vollständigen manuellen Absperren sämtlicher Ausströmdüsen bei gemäß automatischer Regelung vorgesehenen Kühlbetrieb, ist in vorteilhafter Weise eine durch die Regelvorrichtung überwachte Mindestöffnungsstellung für einen Mindestluftstrom durch die Ausströmdüsen im Override-Betrieb vorgesehen.

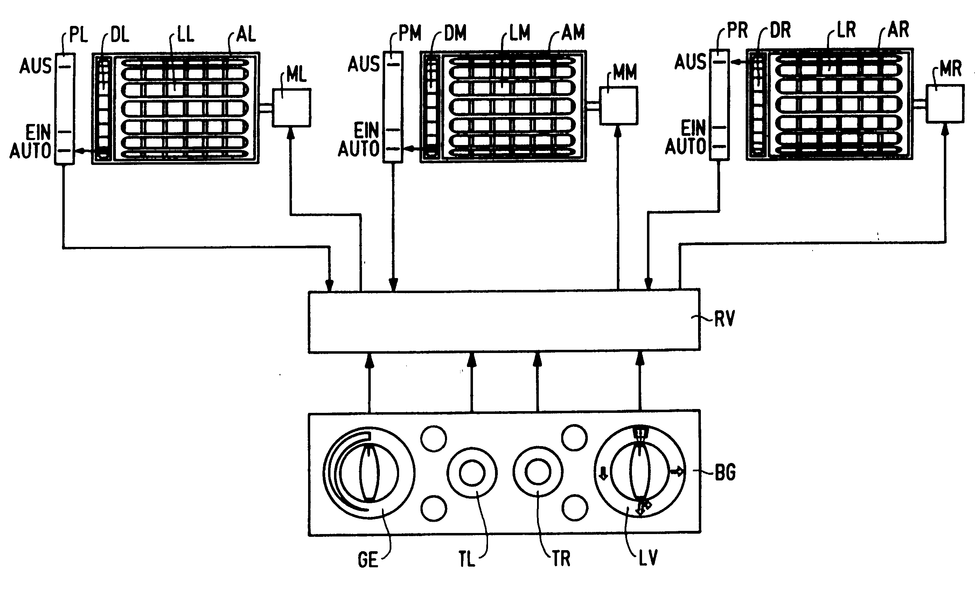

Die Erfindung sowie weitere vorteilhafte Ausgestaltungen der Erfindung werden im folgenden anhand eines schematisch in der Zeichnung dargestellten Ausführungsbeispiels näher erläutert.

Über das Armaturenbrett eines hier nicht näher dargestellten Kraftfahrzeuges sind eine linke Ausströmdüse AL, eine rechte Ausströmdüse AR und eine mittige Ausströmdüse AM verteilt angeordnet. Die von der Rückseite der Ausströmdüsen einströmende Luft tritt an der Vorderseite durch vertikal schwenkbare Lamelleneinsätze LL;LR;LM mit festen waagrechten Richtlamellen und dahinter horizontal schwenkbaren vertikalen Richtlamellen, durch deren jeweilige Verschwenkung der austretende Luftstrom in verschiedene gezielte Strömungs-Richtungen auf die Fahrzeug-Insassen gerichtet werden kann.

Eine in der Zeichnung nicht erkennbare,jeweils hinter dem Lamelleneinsatz angeordnete Absperrklappe wird durch je einen Elektromotor ML bzw.MR bzw.MM angetrieben, der in Stellabhängigkeit von einem Bediengerät BG mit integrierter elektronischer Regelvorrichtung RV steht. Das Bediengerät BG enthält an seiner Vorderseite Einstellmittel für die Luftmenge durch Drehzahländerung eines Gebläses GE, für die Luftverteilung LV, für die Temperatur links TL und für die Temperatur rechts TR.

Falls der an einer oder an mehreren Ausströmdüsen aufgrund der automatischen Regelung austretende Luftstrom als unangenehm empfunden wird, kann erfindungsgemäß in Override-Funktion über die Regelautomatik eine individuelle manuelle Verstellung der Absperrklappen mit Hilfe der Regelvorrichtung RV und die den Absperrklappen zugeordneten Motoren ML;MR;MM durch Betätigung von jeweils einem in das Gehäuse der Ausströmdüsen seitlich integrierten Drehbedienknopf DL bzw.DR bzw.DM erreicht werden.

Die manuelle Betätigung der Drehbedienknöpfe DL bzw.DR bzw.DM erfolgt über von den diesen betätigte Stell-Potentiometer PL bzw.PR bzw.PM. derart daß ausgehend von einer Raststellung "Auto" zunächst durch Drehen des jeweiligen Drehbedienknopfes die automatische Regelung abgeschaltet und bei Erreichen der Stellung "EIN" des jeweiligen Stell-Potentiometers ein kontinuierlicher Verstellbereich für die jeweilige Absperrklappe erreicht wird. Durch weiteres Drehen des jeweiligen Drehbedienknopfes kann dann bis zum Erreichend er Stellung "AUS" des Stell-Potentiometers die Absperrklappe kontinuierlich weiter verschlossen werden.

Durch eine Überwachung durch die Regelvorrichtung RV wird jedoch in vorteilhafter Weise nach einer Ausgestaltung der Erfindung sichergestellt. daß niemals sämtliche Absperrklappen zu gleicher Zeit aufgrund einer Override-Funktion völlig geschlossen werden können.

Im vorliegenden Ausführungsbeispiel ist davon ausgegangen, daß die linke und die mittlere Ausströmdüse AL bzw.AM vom Fahrzeugfahrer in Automatik-Regelung belassen, jedoch die linke Ausströmdüse AL von der auf dem Fahrersitz befindlichen Person in Override-Funktion soweit wie möglich "von Hand" abgesperrt ist.

Es dürfte ersichtlich sein, daß mit nur geringem zusätzlichen konstruktiven Aufwand über den jeweiligen Drehbedienknopf DL bzw.DR bzw.DM und das nachgeschaltete Stell-Potentiometer PL bzw.PR bzw.PM auf einfache Weise und unter anschließender Mitbenutzung der an sich vorhandenen Regelvorrichtung RV und der Stellmotoren ML bzw.MR bzw.MM die Absperrklappen trotz vorhandener Vollautomatik mit einfachen und kleinbauenden Mitteln individuell entsprechend den Einzelkomfortwünschen der Fahrzeuginsassen verstellbar sind.

## Patentansprüche

1. Belüftungsanlage für ein Kraftfahrzeug mit einer Regelvorrichtung (RV) zur automatischen Regelung von Temperatur bzw. Luftverteilung der aus Ausströmdüsen (AL;AM;AR) in der Mittelebene (Armaturenbrett) austretenden Luftströme wobei diese durch den einzelnen Ausströmdüsen jeweils unmittelbare zugeordnete Stellmittel (DL; DM; DR, von Hand verstellbar sind, **dadurch gekennzeichnet,** daß die Regelvorrichtung zusätzlich in Override-Funktion zu der automatischen Regelung jeweils in Abhängigkeit von der Stellung der Stellmittel zur manuellen, zumindest teilweisen Absperrung der Ausströmdüsen stellbar ist.

2. Belüftungsanlage nach Anspruch 1, **gekennzeichnet** durch ein Stellmittel mit einem Stell-Potentiometer (PL;PM;PR) mit einem Einschaltbereich mit konstantem Stellwert für einen Automatik-Regelbetrieb und einem Override-Steuerbereich mit veränderlichem Stellwert zur manuellen entsprechenden veränderlichen Absperrung der Ausströmdüsen (AL;AM;AR).

3. Belüftungsanlage nach Anspruch 2, **gekennzeichnet** durch ein Stellmittel mit von jeweils einem in das Gehäuse der Ausströmdüsen (AL;AM;AR) integrierten Drehbedienknopf (DL;DM;DR) betätigbaren Stell-Potentiometer (PL;PM;PR).

4. Belüftungsanlage nach Anspruch 2 und/oder 3 **gekennzeichnet** durch eine Raststellung des Stellmittels für den Automatik-Regelbetrieb und einem Dreh-Verschiebe-Stellbereich für den Override-Steuerbereich.

5. Belüftungsanlage mit einer Absperrklappe in der Ausströmdüse nach einem der Ansprüche 1 bis 5, **gekennzeichnet** durch eine Mindestöffnungsstellung der Absperrklappe im Override-Betrieb.

6. Belüftungsanlage nach Anspruch 5, **gekennzeichnet** durch eine durch die Regelvorrichtung (RV) überwachte Mindestöffnungsstellung im Override-Betrieb:

## Claims

1. Ventilation installation for a motor vehicle, having a regulating device (RV) for the automatic regulation of temperature and/or air distribution of the air flow exiting from outlet nozzles (AL; AM; AR) in the middle plane (dashboard), wherein said air flow can be adjusted by hand by means of respective control means (DL; DM; DR) directly associated with the individual outlet nozzles, characterised in that the regulating device can be additionally adjusted in an override function to override the automatic regulation in each case in a manner dependent upon the position of the control means for the manual, at least partial blocking of the outlet nozzles.

2. Ventilation installation according to claim 1, characterised by control means having an adjustment potentiometer (PL; PM; PR) with a closing range with a constant output for an automatic regulating operation and an override control range with a variable output for corresponding variable manual blocking of the outlet nozzles (AL; AM; AR).

3. Ventilation installation according to claim 2, characterised by control means having an adjustment potentiometer (PL; PM; PR) which can be actuated by a respective rotary control knob (DL; DM; DR) integrated into the housing of the outlet nozzles (AL; AM; AR).

4. Ventilation installation according to claim 2 and/or 3, characterised by a maintained setting of the control means for the automatic regulating operation and a rotary displacement adjustment range for the override control range.

5. Ventilation installation having a shut-off flap in the outlet nozzle according to one of claims 1 to 5, characterised by a minimum aperture setting of the shut-off flap in the override operation.

6. Ventilation installation according to claim 5, characterised by a minimum aperture setting monitored by the regulating device (RV) in the override operation.

## Revendications

1. Installation d'aération pour un véhicule automobile comportant un dispositif de régulation (RV) automatique de la température ou de la répartition des courants d'air qui sortent de buses d'éjection (AL; AM; AR) dans le plan médian (tableau de bord), ces courants d'air pouvant être réglés à la main par des moyens (DL; DM; DR) de réglage associés chacun directement aux diverses buses d'éjection, caractérisée par le fait que le dispositif de régulation peut en outre être réglé, en fonctionnement prioritaire par rapport à la régulation automatique, en fonction de la position des moyens de réglage pour l'obturation, manuelle, au moins partielle, des buses d'éjection.

2. Installation d'aération suivant la revendication 1, caractérisée par un moyen de réglage comportant un potentiomètre de réglage (PL; PM; PR) ayant un domaine de branchement à valeur de réglage constante pour un fonctionnement de régulation automatique, et un domaine de commande prioritaire à valeur de réglage variable pour l'obturation manuelle variable adéquate des buses d'éjection (AL; AM; AR).

3. Installation d'aération suivant la revendication 2, caractérisée par un moyen de réglage comportant des potentiomètres de réglage (PL; PM; PR), pouvant être actionnés chacun par un bouton rotatif de commande (DL; DM; DR) intégré au boîtier des buses d'éjection (AL; AM; AR).

4. Installation d'aération suivant la revendication 2 et/ou 3, caractérisée par une position d'encliquetage du moyen de réglage de commande pour le fonctionnement de régulation automatique et par un domaine de réglage rotation-translation pour le domaine de commande prioritaire.

5. Installation d'aération comportant un volet d'obturation disposé dans la buse d'éjection suivant l'une des revendications 1 à 5, caractérisée par un réglage de l'ouverture minimale du volet d'obturation dans le fonctionnement prioritaire.

6. Installation d'aération suivant la revendication 5, caractérisée par une position d'ouverture minimale, contrôlée par le dispositif de régulation (RV), dans le fonctionnement prioritaire.
